# EUROPEAN PATENT APPLICATION

(11) **EP 4 841 311 A1**
(43) Date of publication of application: **18.11.2026**
(21) Application number: 25176920.4
(22) Date of filing: 16.05.2025
(51) Int. Cl.: G01V 3/10

(54) **METHOD OF OPERATING AN INDUCTION METAL DETECTOR AND INDUCTION METAL DETECTOR SUITABLE FOR THIS METHOD**

(71) Applicant: Mettler-Toledo Safeline Ltd., Manchester M50 2XD (GB)
(72) Inventor: CLIMACO, Antonio, Manchester, M15DD (GB)
(74) Representative: Leinweber & Zimmermann

(57) **Abstract**

The data acquisition circuit of an induction metal detector comprises a receiver channel (12), a transmitter monitor channel (18), and an auxiliary channel (8) connected so as to deliver first to fourth demodulation signals (Ar, Asr, Atm and Ast) that allow to determine a value (C) of the coupling between the transmitter coil (2) and the receiver coil (3) corrected for drift.

## Description

The invention relates to a method of operating an induction metal detector comprising a detection coil system with a transmitter coil and a receiver coil comprising the steps of:
generating an ideal transmitter signal,
applying a transmitter channel signal including possible transmitter channel drift to the transmitter coil via a transmitter channel that is driven by the ideal transmitter signal,
receiving a receiver channel signal including possible receiver channel drift via a receiver channel that is driven by an actual received signal from the receiver coil,
determining an indication of a metallic substance on the basis of a variation in the coupling between the transmitter coil and the receiver coil,
and to an induction metal detector suitable for this method.

Such metal detectors mostly operate on a well-known balanced system, wherein the receiver coil is composed of two partial windings connected in opposition to each other. Therefore, when no disturbance is occurring, there will be a net signal across the connected windings of zero. As metal passes through the detector, the balance will be offset as the contaminant passes through the detector. This disturbance is amplified and analysed by the control electronics and detection will occur if the sensitivity threshold has been exceeded. In such induction metal detectors, specifically induction balance metal detectors, the phase and magnitude of the received signal depends on the phase and magnitude of the transmitted magnetic field waves. The phase and magnitude of the received signal are used to detect metal and discriminate between the metal and a product to be examined. Part of the received signal is caused by geometrical imperfections in the construction of the metal detector and therefore a residual signal is always present to some degree even when there are no objects in the detection area. This residual signal is often called out-of-balance (OOB). Usually, it is easy to remove the OOB from the received signal. After demodulating the received signal to baseband the OOB is at DC and is removed by a high-pass filter. However, if the phase and magnitude of the transmitted field vary on sufficiently small timescales, the OOB baseband signal has frequency components which are within the passband of the filter and those components would not be removed. Most metal detectors have at least one mechanism to minimize out-of-balance in order to extend the operational range of the metal detector. One mechanism, which is known as automatic balance circuit, typically involves generating a phase- and magnitude-adjustable wave form at the operating frequency and summing it to the out-of-balance signal (US 10/215,875 B2 and US 5,691,640). The automatic balance circuit relies on the fact that the generated out-of-balance signal tracks the transmitter signal in both phase and amplitude.

EP 2 439 560 B1 discloses a method for monitoring the operation of a metal detection system. A carrier signal having the transmitter frequency and a monitoring signal having a monitoring frequency are provided to a modulation unit that suppresses the carrier signal and provides a modulated monitoring signal which is supplied to a monitoring coil that is inductively coupled to one of the receiver coils. The output signals of the receiver coils are further processed and demodulated in a demodulation unit that provides a demodulated monitoring signal which is compared in phase and/or in amplitude with a reference. Measured deviations in phase and/or amplitude that exceed a given threshold, cause an alarm to indicate that a malfunction of the metal detection system has occurred.

WO 2022/189510 A1 discloses a method for operating a metal detector comprising a measurement phase sensitive detector that demodulates the measurement signal with reference signals which correspond to the transmitter signal and the quadrature signal to thereby produce a complex measurement signal with in-phase measurement signal components and quadrature measurement components. The complex measurement signal and complex receiver signal are applied to a correction module in which signal components caused by instabilities of the transmitter unit are removed from the complex receiver signal.

The circuitry of metal detection usually involves circuits susceptible to drift, e.g. analogue filters and operational amplifiers. Any drift in phase and/or amplitude in these circuits will introduce an extra error resulting into an extra noise source.

It is thus an object of the present invention to provide a method and an apparatus of the above referenced type that are less prone to errors caused by drift.

This object is according to the method aspect of the present invention attained by a method of the above referenced type that is characterized by:
receiving a transmitter monitor channel signal including possible transmitter monitor channel drift via a transmitter monitor channel that is driven by the transmitter channel signal,
generating an ideal auxiliary signal,
superimposing an auxiliary channel signal including possible auxiliary channel drift on both of the actual received signal and the transmitter channel signal driving the receiver and transmitter monitor channels, respectively, via an auxiliary channel that is driven by the ideal auxiliary signal,
demodulating the receiver channel signal using the ideal transmitter signal as a first reference signal to thereby deliver a first demodulation signal and using the ideal auxiliary signal as a second reference signal to thereby deliver a second demodulation signal,
demodulating the transmitter monitor channel signal using the ideal transmitter signal as a third reference signal to thereby deliver a third demodulation signal and using the ideal auxiliary signal as a fourth reference signal to thereby deliver a fourth demodulation signal,
determining a value of the coupling between the transmitter coil and the receiver coil on the basis of the first to fourth demodulation signals.

In the method according to the invention, the first to fourth demodulation signals contain information about the drift components of the transmitter channel, the receiver channel, the transmitter monitor channel, and the auxiliary channel. On the basis of these four demodulations signals, it is thus possible to determine a value C of the coupling between the transmitter coil and the receiver coil corrected for drift. Thereby, an ideal received signal R may be modelled as the value of the coupling C multiplied by the ideal transmitter signal T.

Preferably, the value of the coupling is determined as the ratio of the first demodulation signal to the second demodulation signal divided by the ratio of the third demodulation signal to the fourth demodulation signal.

The value C of the coupling between the transmitter coil and the receiver coil may be modelled by the equation $Rd = Td ⋅ C$ (1), wherein Rd designates the actual received signal and Td designates the transmitter channel signal. The latter signal may be modelled by the equation $Td = T ⋅ Dt$ (2), wherein T designates the ideal transmitter signal and Dt designates the transmitter channel drift.

Since the auxiliary channel signal Sr, St is superimposed on the actual received signal Rd and the transmitter channel signal Td, respectively, the receiver channel signal Ru, and the transmitter monitor channel signal Tm satisfy the following equations $Ru = \left(Rd+Sr\right) ⋅ Drc = C ⋅ T ⋅ Dt ⋅ Drc + Sr ⋅ Drc$ (3) $Tm = \left(Td+St\right) ⋅ Dtc = T ⋅ Dt ⋅ Dtc + St ⋅ Dtc$ (4), wherein Drc is the receiver channel drift and Dtc is the transmitter monitor channel drift. For the special case that the auxiliary channel signal is stable in both amplitude and phase, i.e. is free of drift, the superimposed signals Sr, St are the ideal auxiliary signal S.

The first and second demodulation signals Ar and Asr, respectively, obtained by synchronous demodulation of the receiver channel signal Ru using the ideal transmitter signal T and the ideal auxiliary signal S, respectively, as first and second reference signals satisfy the equations $Ar = C ⋅ Dt ⋅ Drc$ $Asr = Drc$ (5).

The third and fourth demodulation signals Atm and Ast, respectively, satisfy the equations $Atm = Dt ⋅ Dtc$ $Ast = Dtc$ (6).

Dividing the ratio of the first to the second demodulation signals Ar and Asr, respectively, by the ratio of the third to the fourth demodulation signals Atm and Ast, respectively, yields for the special case of the auxiliary channel signal without drift $\frac{Ar}{Asr} / \frac{Atm}{Ast} = \frac{C ⋅ Dt ⋅ Drc}{Drc} / \frac{Dt ⋅ Dtc}{Dtc} = C$ (7).

The above equation (7) shows that the value C of the coupling is compensated for drift, and the ideal received signal R can be calculated as $R = T ⋅ C$ (7').

When lifting the above requirement of an entirely stable auxiliary channel and allowing for the auxiliary channel including a drift Ds the above equations (5) and (6) for Asr and Ast change as follows: $Asr = Drc ⋅ Ds$ $Ast = Dtc ⋅ Ds$ (8).

The above equation (7) thereby becomes $\frac{Ar}{Asr} / \frac{Atm}{Ast} = \frac{C ⋅ Dt ⋅ Drc}{Drc ⋅ Ds} / \frac{Dt ⋅ Dtc}{Dtc ⋅ Ds} = C$ (9).

It follows from the above equation (9) that drift is cancelled out in the value of the coupling even if the auxiliary channel signal includes auxiliary channel drift Ds that equally affects the receiver and transmitter monitor channels. Therefore, in all cases the ideal received signal R can be calculated as $R = T ⋅ C$ (9').

The value C of the coupling and equivalently the ideal received signal R is a complex number that depends on the electromagnetic characteristics of what is in the metal detector's inspection area. This dependency is used in the metal detector to judge if what is inspected is contaminated with metal or not.

In an expedient embodiment, a reference value of the coupling or the ideal received signal that is indicative of the absence of metallic substance is determined by a training algorithm. The training may be based on a dummy article that is repetitively passed through the detector's inspection area.

According to a further aspect of the invention, a neighbourhood of the reference value is specified so as to qualify values of the coupling inside the neighbourhood as indicative of the absence of metallic substance while qualifying values of the coupling outside the neighbourhood as indicative of the presence of metallic substance.

Since the value C of the coupling or the ideal received signal R is a complex number, it may be represented as a point in a two-dimensional XY plane. The reference value C_{ref} that is for example learned by training when the metal detector is set up for the inspection of products may thus be represented by a two-dimensional vector that is directed to the point representing the reference value C_{ref}.

Specifically, to compare inspective products to the trained one, a neighbourhood drawn around the trained vector may be defined as a decision area. Everything that falls outside this decision area may be considered as contaminated with metal. The size of the decision area needs to take into account several aspects including possible drift of the electronic acquisition circuit of the metal detector. Being able to compensate for the electronic drift allows this area to be smaller and the detections of smaller metal contaminations that cause the vector deviation to be smaller for comparison with the training product. The more drift one can compensate it for, the smaller the decision area needs to be and the better is the performance of the metal detector. The effect of the electronic drift is always a performance reduction and an increase in a size of the minimum detectable metal particle. Specifically, the decision area can have different shapes, and can simplify to a threshold.

From an apparatus point of view, the object underlying the invention is attained by an induction metal detector comprising:
a detection coil system with a transmitter coil and a receiver coil,
a transmitter channel including a transmitter signal generator for generating an ideal transmitter signal and a signal path driven by the ideal transmitter signal and applying a transmitter channel signal including possible transmitter channel drift to the transmitter coil,
a receiver channel including a signal path driven by an actual received signal from the receiver coil and delivering a receiver channel signal including possible receiver channel drift,
means for providing an indication of a metallic substance on the basis of a variation in the coupling between the transmitter coil and the receiver coil,
characterized by:
   a transmitter monitor channel including a signal path driven by the transmitter channel signal and delivering a transmitter monitor channel signal including possible transmitter monitor channel drift,
   an auxiliary channel including an auxiliary signal generator for generating an ideal auxiliary signal and a signal path driven by the ideal auxiliary signal for superimposing an auxiliary channel signal including possible auxiliary channel drift on both of the actual received signal and the transmitter signal driving the signal path of the receiver channel and the signal path of the transmitter monitor channel, respectively,
   wherein the signal path of the receiver channel comprises receiver channel demodulator means using the ideal transmitter signal as a first reference signal for delivering a first demodulation signal and using the ideal auxiliary signal as a second reference signal for delivering a second demodulation signal,
   wherein the signal path of the transmitter monitor channel comprises transmitter monitor channel demodulator means using the ideal transmitter signal as a third reference signal for delivering a third demodulation signal and using the ideal auxiliary signal as a fourth reference signal for delivering a fourth demodulation signal, and
   wherein means is provided for determining a value of the coupling between the transmitter coil and the receiver coil on the basis of the first to fourth demodulation signals.

Advantageous embodiments of the induction metal detector are defined in dependent claims 6 to 10.

In the following, the invention is exemplarily described with reference to the drawings, wherein
- Fig. 1: is a schematic circuit diagram of an embodiment of the induction metal detector, and
- Figs. 2a, b, and c: are diagram illustrating operational features of an exemplary metal detection algorithm.

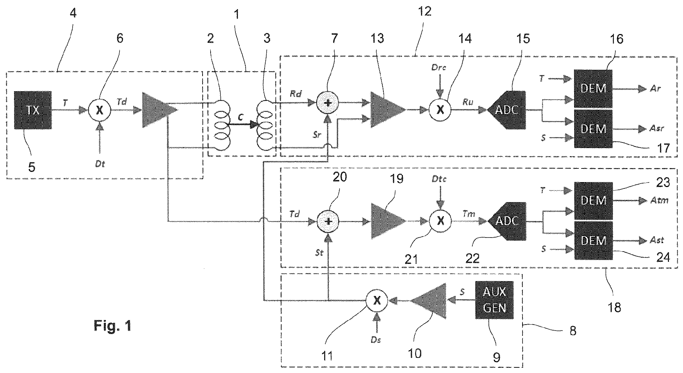

In an induction metal detector schematically illustrated in Fig. 1, a detection coil system 1 comprises a transmitter coil 2 and a receiver coil 3 with coupling C between the coils.

A transmitter channel 4 comprises a transmitter signal generator 5 that generates an ideal transmitter signal T. On its signal path through the transmitter channel 4, the ideal transmitter signal T may be changed into a transmitter channel signal Td including transmitter channel drift Dt. This is modelled as a signal multiplication 6. The transmitter channel signal Td is applied to the transmitter coil 2 for its energisation.

Depending on the coupling C between the transmitter coil 2 and the receiver coil 3, an actual received signal Rd is induced in the receiver coil 3.

An auxiliary channel 8 comprises an auxiliary signal generator 9 that generates an ideal auxiliary signal S and an amplifier 10 that receives the ideal auxiliary signal S as an input. On its way through the signal path of the auxiliary channel 8, the ideal auxiliary signal S may be changed by auxiliary channel drift Ds as is modelled by a multiplication 11.

A receiver channel 12 comprises an input amplifier 13 with two input terminals and one output terminal. An adder 7 having two input terminals and one output terminal has the output terminal connected to one of the input terminals of the input amplifier 13. The actual received signal Rd from the receiver coil 3 is applied across one of the input terminals of the adder 7 and the other input terminal of the input amplifier 13. The other input terminal of the input amplifier 13 is supplied with the auxiliary channel signal Sr. On its way through the signal path of the receiver channel 12, the output signal of the input amplifier 13 that corresponds to the actual received signal Rd superposed with the auxiliary channel signal Sr may be changed by drift Drc to become a receiver channel signal Ru as is modelled by a multiplication 14. The receiver channel signal Ru is supplied to the input of an analogue-to-digital converter 15 whose output is demodulated by a first synchronous demodulator 16 using the ideal transmitter signal T as a reference signal and delivering a first demodulation signal Ar. The output of the analogue-to-digital converter 15 is also demodulated by a second synchronous demodulator 17 that uses the ideal auxiliary signal S as a reference signal to thereby deliver a second demodulation signal Asr.

A transmitter monitor channel 18 comprises an input amplifier 19 having an input terminal and an output terminal. An adder 20 having two input terminals and an output terminal has its output terminal connected to the input terminal of input amplifier 19. One of the input terminals of the adder 20 is supplied with the transmitter channel signal Td, and the other one is supplied with the auxiliary channel signal St. On its way through the signal path of the transmitter monitor channel 18, the output signal of the input amplifier 19 corresponding to the transmitter channel signal Td superimposed with the auxiliary channel signal St may be changed by drift to become a transmitter monitor channel signal Tm including drift Dtc as is modelled as a multiplication 21. The transmitter monitor channel signal Tm is applied to the input of an analogue-to-digital converter 22. The output of the analogue-to-digital converter 22 is demodulated in a third synchronous demodulator 23 that uses the ideal transmitter signal T as a reference signal to thereby deliver a third demodulation signal Atm. In addition, the output of the analogue-to-digital converter 22 is demodulated by a fourth synchronous demodulator 24 using the ideal auxiliary signal S as a reference signal to thereby deliver a fourth demodulation signal Ast.

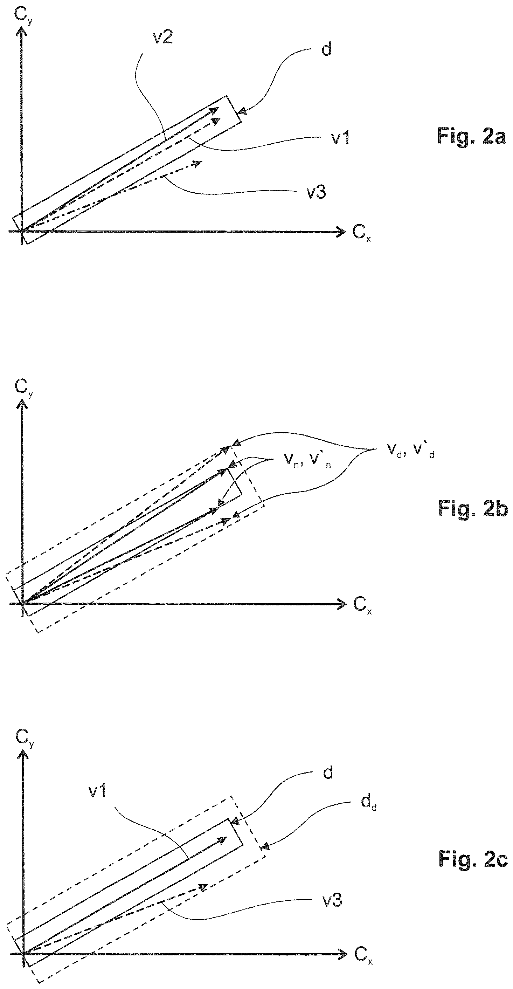

In Fig. 2(a) to (c) the value of C as defined by the above equation (1) is illustrated as a two-dimensional complex vector in an XY plane for various situations. The vector v1 in Fig. 2(a) represents the value of C resulting from a training product that is free from metallic contamination. The vector v1 is learned in a setup mode of the metal detector to constitute a reference value. Vectors v2 and v3 in Fig. 2(a) are obtained in an inspection mode of the metal detector for a non-contaminated and a contaminated inspected product, respectively. d designates a neighbourhood around the training product vector v1 chosen to define a decision area. All values inside this area are considered as non-contaminated while everything that falls outside this area is considered as contaminated.

Fig. 2(b) illustrates the dependence of the vector for a non-contaminated product on electronic drift of the metal detector's electronic acquisition circuit. With no electronic drift the non-contaminated vector may vary between the vectors vₙ and v'ₙ. In the presence of electronic drift, there is a broader range of change between the vectors v_{d} and v'_{d}.

Fig. 2(c) shows the training product vector v1 and the decision area d of Fig. 2(a) and the enlarged decision area d_{d} required by the electronic drift. In this case, the contaminated product vector v3 is within the extended decision area d_{d} and will therefore not be detected.

By determining the value of the coupling C, or equivalently the ideal received signal R, on the basis of the first to fourth demodulation signals in accordance with the above equations (7) or (9), the determined value C is corrected for drift. This allows the decision area to be smaller and enables the detection of smaller metal contaminants that cause the vector deviation to be smaller compared to the training product.

In other words, when not corrected for drift, the detection algorithm would use Rd·Drc, while in the invention correction for all drifts Drc, Ds, Dt, and Dtc is provided.

### List of reference symbols:

- 1: detection coil system
- 2: transmitter coil
- 3: receiver coil
- 4: transmitter channel
- 5: transmitter signal generator
- T: ideal transmitter signal
- Td: transmitter channel signal
- Dt: transmitter channel drift
- 6: multiplication
- R: ideal received signal
- Rd: actual received signal
- 7: adder
- 8: auxiliary channel
- 9: auxiliary signal generator
- S: ideal auxiliary signal
- Sr, St: auxiliary channel signal
- 10: amplifier
- Ds: auxiliary channel drift
- 11: multiplication
- 12: receiver channel
- 13: input amplifier
- Drc: drift
- Ru: receiver channel signal
- 14: multiplication
- 15: analogue-to-digital converter
- 16: first synchronous demodulator
- Ar: first demodulation signal
- 17: second synchronous demodulator
- Asr: second demodulation signal
- 18: transmitter monitor channel
- 19: input amplifier
- 20: adder
- 21: multiplication
- Dtc: drift
- Tm: transmitter monitor channel signal
- 22: analogue-to-digital converter
- 23: third synchronous demodulator
- Atm: third demodulation signal
- 24: fourth synchronous demodulator
- Ast: fourth demodulation signal
- v1: training product vector
- v2: non-contaminated product vector
- v3: contaminated product vector
- d: decision area
- v_{d}, v'_{d}: vectors
- vₙ, v'ₙ: vectors
- d_{d}: extended decision area

## Claims

1. Method of operating an induction metal detector comprising a detection coil system with a transmitter coil and a receiver coil comprising the steps of:
generating an ideal transmitter signal (T),
applying a transmitter channel signal (Td) including possible transmitter channel drift (Dt) to the transmitter coil via a transmitter channel that is driven by the ideal transmitter signal (T),
receiving a receiver channel signal (Ru) including possible receiver channel drift (Drc) via a receiver channel that is driven by an actual received signal (Rd) from the receiver coil,
determining an indication of a metallic substance on the basis of a variation in the coupling between the transmitter coil (2) and the receiver coil (3),
**characterized by**:
receiving a transmitter monitor channel signal (Tm) including possible transmitter monitor channel drift (Dtc) via a transmitter monitor channel that is driven by the transmitter channel signal (Td),
generating an ideal auxiliary signal (S),
superimposing an auxiliary channel signal (Sr, St) including possible auxiliary channel drift (Ds) on both of the actual received signal (Rd) and the transmitter channel signal (Td) driving the receiver and transmitter monitor channels, respectively, via an auxiliary channel that is driven by the ideal auxiliary signal (S),
demodulating the receiver channel signal (Ru) using the ideal transmitter signal (T) as a first reference signal to thereby deliver a first demodulation signal (Ar) and using the ideal auxiliary signal (S) as a second reference signal to thereby deliver a second demodulation signal (Asr),
demodulating the transmitter monitor channel signal (Tm) using the ideal transmitter signal (T) as a third reference signal to thereby deliver a third demodulation signal (Atm) and using the ideal auxiliary signal (S) as a fourth reference signal to thereby deliver a fourth demodulation signal (Ast),
determining a value (C) of the coupling between the transmitter coil (2) and the receiver coil (3) on the basis of the first to fourth demodulation signals (Ar, Asr, Atm, Ast).

2. Method according to claim 1, wherein the value (C) of the coupling is determined as the ratio of the first demodulation signal (Ar) to the second demodulation signal (Asr) divided by the ratio of the third demodulation signal (Atm) to the fourth demodulation signal (Ast).

3. Method according to anyone of claims 1 or 2, wherein a reference value (v1) of the coupling that is indicative of the absence of metallic substance is determined by a training algorithm.

4. Method according to claim 3, wherein a neighbourhood (d) of the reference value (v1) is specified so as to qualify values (C) of the coupling inside the neighbourhood (d) as indicative of the absence of metallic substance while qualifying values (C) of the coupling outside the neighbourhood (d) as indicative of the presence of metallic substance.

5. Induction metal detector comprising:
a detection coil system (1) with a transmitter coil (2) and a receiver coil (3),
a transmitter channel (4) including a transmitter signal generator (5) for generating an ideal transmitter signal (T) and a signal path driven by the ideal transmitter signal (T) and applying a transmitter channel signal (Td) including possible transmitter channel drift (Dt) to the transmitter coil (2),
a receiver channel (12) including a signal path driven by an actual received signal (Rd) from the receiver coil (3) and delivering a receiver channel signal (Ru) including possible receiver channel drift (Drc),
means for providing an indication of a metallic substance on the basis of a variation in the coupling between the transmitter coil (2) and the receiver coil (3),
**characterized by**:
a transmitter monitor channel (18) including a signal path driven by the transmitter channel signal (Td) and delivering a transmitter monitor channel signal (Tm) including possible transmitter monitor channel drift (Dtc),
an auxiliary channel (8) including an auxiliary signal generator (9) for generating an ideal auxiliary signal (S) and a signal path driven by the ideal auxiliary signal (S) for superimposing an auxiliary channel signal (Sr, St) including possible auxiliary channel drift (Ds) on both of the actual received signal (Rd) and the transmitter signal (Td) driving the signal path of the receiver channel (12) and the signal path of the transmitter monitor channel (18), respectively,
wherein the signal path of the receiver channel (12) comprises receiver channel demodulator means (16, 17) using the ideal transmitter signal (T) as a first reference signal for delivering a first demodulation signal (Ar) and using the ideal auxiliary signal (S) as a second reference signal for delivering a second demodulation signal (Asr),
wherein the signal path of the transmitter monitor channel (18) comprises transmitter monitor channel demodulator means (23, 24) using the ideal transmitter signal (S) as a third reference signal for delivering a third demodulation signal (Atm) and using the ideal auxiliary signal (S) as a fourth reference signal for delivering a fourth demodulation signal (Ast), and
wherein means is provided for determining a value (C) of the coupling between the transmitter coil (2) and the receiver coil (3) on the basis of the first to fourth demodulation signals (Ar, Asr, Atm, Ast).

6. Induction metal detector according to claim 5, wherein the determining means is operative to determine the value (C) of the coupling as the ratio of the first demodulation signal (Ar) to the second demodulation signal (Asr) divided by the ratio of the third demodulation signal (Atm) to the fourth demodulation signal (Ast).

7. Induction metal detector according to anyone of claims 5 or 6, wherein each of the receiver and the transmitter monitor channels (12, 18) comprises an adder (7, 20) for superimposing the auxiliary channel signal (Sr, St) on the actual received signal (Rd) and the transmitter channel signal (Td), respectively.

8. Induction metal detector according to anyone of claims 5 to 7, wherein each of the receiver and the transmitter monitor channels (12, 18) comprises an analogue-to-digital converter (15, 22) for receiving the receiver channel and monitor channel signals (Ru, Tm), respectively, as an input and supplying the analogue-to-digital converted signal to the demodulator means (16, 17; 23, 24) of the receiver and the transmitter monitor channels (12, 18), respectively.

9. Induction metal detector according to anyone of claims 5 to 8, wherein each of the receiver channel and transmitter monitor channel demodulator means (16, 17; 23, 24) is a complex synchronous demodulator.

10. Induction metal detector according to anyone of clams 5 to 9, wherein the receiver channel demodulator means comprises first and second demodulators (16, 17) using the first and second reference signals (T, S), respectively, and/or the transmitter monitor channel demodulator means comprises third and fourth demodulators (23, 24) using the third and fourth reference signals (T, S), respectively.
